# EUROPÄISCHE PATENTANMELDUNG

(11) **EP 4 807 107 A1**
(43) Veröffentlichungstag der Anmeldung: **16.09.2026**
(21) Anmeldenummer: 25163361.6
(22) Anmeldetag: 12.03.2025
(51) Int. Cl.: E04H 12/12, E04H 12/08, E04H 12/16, B28B 7/00, F03D 13/20

(54) **SCHALUNG ZUR HERSTELLUNG EINES TURMRINGSEGMENTS, INSBESONDERE EINER WINDKRAFTANLAGE UND VERFAHREN ZUR HERSTELLUNG DES TURMRINGSEGMENTS**

(71) Anmelder: FUCHS Europoles Wind GmbH, 92318 Neumarkt (DE)
(72) Erfinder: Fuchs, Conrad, 92234, Berching (DE); Joos, Jürgen, 88605, Messkirch-Menningen (DE)
(74) Vertreter: Ziebig Hengelhaupt Intellectual Property Attorneys Patentanwaltskanzlei PartGmbB

(57) **Zusammenfassung**

Die Erfindung betrifft eine Schalung (100) zur Herstellung eines Turmringsegments (1), insbesondere einer Windkraftanlage, als Betonfertigteil, mit einem gewölbten Schalboden (102), dessen Wölbung einer zylindrischen oder konischen Innenkontur (In) des herzustellenden Turmringsegments (1) entspricht, und Schalungswandungen (110a, 110b, 120a 120b), welche mit dem Schalboden (102) einen mit Betonmasse befüllbaren Hohlraum (Ho) ausbilden. Gemäß der Erfindung ist vorgesehen, dass zumindest eine erste der Schalungswandungen (110a, 110b) bezüglich des Schalbodens (102) in einer Linearführung (170) linear verstellbar gelagert ist. Die Erfindung betrifft auch ein Verfahren zur Herstellung des Turmringsegments (1).

## Beschreibung

Die Erfindung betrifft eine Schalung zur Herstellung eines Turmringsegments, insbesondere konischen oder zylindrischen Turmringsegments, als Betonfertigteil für eine vorzugsweise als Spannbetonturm ausgeführte Turmstruktur, insbesondere einer Windkraftanlage, sowie ein Verfahren zur Herstellung eines solchen Turmringsegments.

Windkraftanlagen besitzen einen Turm, der zum Beispiel in Stahlbetonbauweise hergestellt sein kann. Der Turm besteht aus Turmringsegmenten, die beispielsweise als Betonfertigteile vorab gefertigt werden. Dadurch ist eine witterungsunabhängige und wirtschaftliche Vorfertigung der Turmringsegmente möglich, die vorgefertigten Turmringsegmente werden typischerweise anschließend an den Aufstellungsort transportiert und dort zu einer Turmstruktur, wie etwa einem Spannbetonturm montiert. Hierzu werden die Turmringsegmente beispielsweise zunächst zu Ringstrukturen zusammengesetzt und aufeinandergestapelt. Diese Ringstrukturen werden bei herkömmlichen Türmen durch Mörtel oder eine Vergussmasse miteinander verbunden. Daneben können auch mechanische Verbindungselemente wie Schraubverbindungen und dergleichen verwendet werden. Bei Spannbetontürmen werden die übereinander angeordneten Turmringsegmente typischerweise in axialer Richtung mittels Spannglieder, die beispielsweise Litzen oder Litzenbündel umfassen können, miteinander verspannt.

Bei einem Hybridturm ist typischerweise ein unterer Teil des Turms von einem Spannbetonturm insbesondere in Stahlbetonbauweise gebildet, auf den ein Stahlrohrturm aufgesetzt ist. Der Stahlrohrturm trägt die eigentliche Windturbine mit Maschinenhaus, Generator, Nabe, Rotorblättern usw.

Für Stahlbetontürme können zylindrische oder konische Turmringsegmente verwendet werden, die beispielsweise werkseitig in einer Schalung hergestellt werden. So beschreibt CN 27257060 U beispielsweise eine Schalung zur Fertigung eines einzelnen Turmringsegments, die horizontal angeordnet ist und einen nach oben gewölbten Schalboden, sowie daran schwenkbar gelagerte Schalungswandungen und eine Deckeleinrichtung umfasst. Diese Komponenten bilden einen Hohlraum, in den nach dem Schließen der Deckeleinrichtung über einen Spalt Beton gegossen werden kann. Die Oberflächen der Schalungswandungen sind präzise maschinell bearbeitet, um eine Fertigung mit geringen Fertigungstoleranzen bereitzustellen.

Ausgehend von diesem Stand der Technik stellt sich die Erfindung zur Aufgabe, eine verbesserte Schalung und ein verbessertes Verfahren zur Herstellung eines Turmringsegments für einen Spannbetonturm anzugeben.

Zur Lösung dieser Aufgabe ist eine Schalung zur Herstellung eines Turmringsegments mit den Merkmalen des Anspruchs 1 sowie ein Verfahren zur Herstellung des Turmringsegments mit den Merkmalen des Anspruchs 11 vorgesehen. Vorteilhafte Ausgestaltungen der Erfindung sind Gegenstand der Unteransprüche.

Gemäß einem ersten Aspekt der Erfindung wird eine Schalung zur Herstellung eines Turmringsegments, insbesondere einer Windkraftanlage, als Betonfertigteil bereitgestellt. Die Schalung umfasst:
- einen gewölbten Schalboden, dessen Wölbung einer zylindrischen oder konischen Innenkontur des herzustellenden Turmringsegments entspricht, sowie
- Schalungswandungen, welche mit dem Schalboden einen mit Betonmasse befüllbaren Hohlraum begrenzen. Gemäß der Erfindung ist vorgesehen, dass zumindest eine erste der Schalungswandungen bezüglich des Schalbodens in einer Linearführung linear verstellbar gelagert ist.Eine derartige Ausgestaltung der Schalung hat den technischen Vorteil, dass beim Gießen des Turmringsegments im Bereich der ersten Schalungswandung auftretende Hinterschneidungen in größerem Umfang toleriert werden können. Dies begünstigt zum einen die Ausschalung von Turmringsegmenten, welche insbesondere konische Innenkonturen mit vergleichsweise großer Ausdehnung in Umfangsrichtung aufweisen, zum anderen wird dadurch die Verwendung der zumindest einen ersten Schalungswandung zur Arretierung von in das Turmsegment einzubettenden Einbauteilen, insbesondere in einer axialen Ausrichtung entlang der zylindrischen oder konischen Innenkontur des herzustellenden Turmringsegments, ermöglicht. Das lineare Verstellen der zumindest einen ersten Schalungswandung ermöglicht eine gleichmäßige Trennung der daran geformten Kontaktfläche des Turmringsegments bei vergleichsweise geringen Verfahrwegen.

Als Kontaktflächen des Turmringsegments werden hier insbesondere solche Oberflächen des Turmringsegments verstanden, welche bei der bestimmungsgemäßen Verwendung des Turmringsegments, insbesondere im Spannbetonturmbau, einen Stoß zu einem angrenzenden Turmringsegment bilden. Die zylindrischen oder konischen Turmringsegmente bilden einen Abschnitt der axialen Turmstruktur, insbesondere des Spannbetonturms. Jedes Turmringsegment erstreckt sich über einen Bereich einer Mantelfläche der Gestalt eines Zylinders oder Kegelstumpfs mit axialer Symmetrie im Sinne einer Rotationsymmetrie um eine axiale Richtung. Die hergestellten Turmringsegmente weisen vertikale Kontaktflächen, die einen Stoß zu einem in tangentialer bzw. Umfangsrichtung angrenzenden Turmringsegment bilden, und horizontale Kontaktflächen, die einen Stoß zu einem in axialer Richtung angrenzenden Turmringsegment bilden, auf.

Die zumindest eine erste Schalungswandung der Schalung ist bevorzugt dazu ausgelegt, eine vertikale Kontaktfläche des Turmringsegments in vorgegebener Orientierung zum Schalboden auszubilden, wobei am Schalboden die Innenkontur des Turmringsegments geformt wird. Insbesondere bei konischen Turmringsegmenten verlaufen die vertikalen Kontaktflächen i. A. nicht senkrecht zur Innenkontur des Turmringsegments, d. h. der Schalboden und die zumindest eine erste Schalungswandung können nicht zugleich an zueinander senkrecht verlaufenden Flächen gebildet werden. Dies bedeutet insbesondere, dass bei der hier beschriebenen "liegenden" Herstellung der Turmringsegmente, bei der die Innenkontur des Turmringsegments am Schalboden geformt wird, entweder der Schalboden bezüglich einer senkrecht zum Schwerefeld verlaufenden Richtung oder die zumindest eine erste Schalungswandung bezüglich des Schwerefelds geneigt angeordnet werden muss. Auf der einen Seite ist aufgrund des großen Gewichts der hergestellten Turmsegmente eine Entnahme in einer Richtung schräg zum Schwerfeld technisch aufwändig. Die zumindest eine erste Schalungswandung bildet jedoch bei einer geneigten Anordnung bezüglich des Schwerefelds i. A. eine Hinterschneidung bezüglich dieser bevorzugten Entnahmerichtung aus. Dieser Problematik wird erfindungsgemäß dadurch begegnet, dass die erste Schalungswandung linear verstellbar ist, so dass diese gleichmäßig vom hergestellten Betonfertigbauteil verbracht werden kann. Insbesondere hinsichtlich verschwenkbar gelagerten Schalungswänden weist diese Ausbildung den technischen Vorteil auf, dass eine für das Ausschalen des fertiggestellten Turmringsegments hinreichender Versatz schon bei vergleichsweise geringen Verfahrwegen bereitgestellt werden kann, wohingegen bei schwenkbar gelagerten Schalungswänden hierzu insbesondere bei Turmringsegmenten mit großer Ausdehnung in Umfangsrichtung eine Verschwenkung über relativ große Winkelbereiche notwendig werden könnte.

Vorzugsweise ist die zumindest eine erste Schalungswandung in einer vorgegebenen Orientierung bezüglich des Schalbodens linear verstellbar gelagert. Mit anderen Worten kann die erste Schalungswandung bezüglich des Schalbodens in vorgegebener Orientierung in axialer Richtung so verstellt werden, dass diese bündig am Schalboden anliegt.

Bevorzugt entspricht die vorgegebene Orientierung der ersten Schalungswandung bezüglich des Schalbodens einer Konizität des herzustellenden Turmringsegments, insbesondere bei konischen Turmringsegmenten dem Sinus des halben Öffnungswinkels des zugeordneten Kegels.

Besonders bevorzugt ist die zumindest eine erste Schalungswandung in der vorgegebenen Orientierung bezüglich einer Hochachse der Schalung und/oder dem Schwerefeld in einem Winkel ausgerichtet, welcher der Konizität des herzustellenden Turmringsegments, insbesondere bei konischen Turmringsegmenten dem Sinus des halben Öffnungswinkels des zugeordneten Kegels, entspricht.

In vorteilhafter Ausgestaltung umfasst die Schalung einen Linearantrieb, insbesondere einen elektrischen, elektromechanischen oder hydraulischer Linearantrieb, welcher dazu ausgebildet ist, die zumindest eine erste Schalungswandung bezüglich des Schalbodens linear zu verstellen.

Bevorzugt weist die zumindest eine erste Schalungswandung zumindest eine schalungsinnenseitig hervorstehende Auskragung auf, welche zur Anordnung und Fixierung eines in das Turmsegment einzubettenden Einbauteils, insbesondere Aussparungsrohrs, ausgebildet ist. Eine solche Auskragung bildet eine Hinterschneidung bei der Herstellung von zylindrischen und konischen Turmringsegmenten. Um das Ausschalen eines solchen Turmringsegments zu ermöglichen, sind bei schwenkbar gelagerten Schalungswandungen in Abhängigkeit des Abstands der Auskragung zur Schwenkachse Schwenkbewegungen über einen vergleichsweise großen Winkelbereich notwendig. Im Gegensatz dazu wird dies bei der hier vorgestellten Linearführung der zumindest einen ersten Schalungswandung bereits bei vergleichsweise geringen Verfahrwegen in axialer Richtung bereitgestellt.

Vorzugsweise ist eine weitere erste Schalungswandung an einer der ersten Schalungswandung gegenüberliegenden Seite des Schalbodens vorgesehen. Die weitere erste Schalungswandung ist bezüglich des Schalbodens insbesondere in axialer Richtung linear verstellbar gelagert. Die beiden gegenüberliegenden ersten Schalungswandung sind parallel zueinander ausgerichtet.

Besonders bevorzugt sind jeweils gegenüberliegend an den beiden ersten Schalungswandungen schalungsinnenseitig hervorstehende Auskragungen zur Anordnung des in das Turmsegment einzubettenden Einbauteils, insbesondere Aussparungsrohrs, vorgesehen. Das Einbauteil, insbesondere Aussparungsrohr, kann in Ausgestaltungen zwischen den gegenüberliegenden Auskragungen insbesondere durch lineares Verstellen der ersten Schalungswandungen in axialer Richtung kraftschlüssig, bevorzugt mit gleichmäßigem Anpressdruck, fixiert werden.

Gemäß möglichen Ausgestaltungen umfasst die Linearführung ein Schienensystem mit zueinander bezüglich der axialen Richtung verschiebbaren Schienen und/oder mit zumindest einem auf einer Führungsschiene beweglich geführten Führungswagen.

Weiter bevorzugt ist die Linearführung auf mehreren, insbesondere zwei oder drei, zueinander bezüglich einer Hochachse der Schalung beabstandeten, lateralen Ebenen angeordnet, um eine stabile Verankerung der zumindest einen ersten Schalungswandung bezüglich des Schalungsbodens, insbesondere hinsichtlich der vorgegebenen Orientierung, sicherzustellen.

Ein weiterer Aspekt der Erfindung betrifft ein Verfahren zur Herstellung des vorstehend bereits beschriebenen Turmringsegments, insbesondere der Windkraftanlage, als Betonfertigteil, wobei eine der vorstehend bereits genannten Schalungen bereitgestellt und mit Betonmasse verfüllt wird. Nach dem Aushärten der Betonmasse wird das in der Schalung hergestellte Turmringsegment ausgeschalt, wobei die zumindest eine erste Schalungswandung bezüglich des Schalbodens in axialer Richtung linear verstellt wird.

Bevorzugt wird die zumindest eine erste Schalungswandung in der vorgegebenen Orientierung bezüglich des Schalbodens in axialer Richtung linear verstellt, wobei die vorgegebene Orientierung der zumindest einen ersten Schalungswandung bezüglich des Schalbodens einer Konizität des herzustellenden Turmringsegments entspricht, wobei die Konizität bei zylindrischen Turmringsegmenten null ist.

Besonders bevorzugt wird die zumindest eine erste Schalungswandung in der vorgegebenen Orientierung bezüglich einer sich in Richtung des Schwerefelds erstreckenden Hochachse der Schalung zur Herstellung eines konischen Turmringsegments in einem Winkel ausgerichtet, der der Konizität des herzustellenden Turmringsegments entspricht, wobei die Konizität bei zylindrischen Turmringsegmenten null ist.

In vorteilhafter Ausgestaltung des Verfahrens wird vor dem Befüllen der Schalung mit Betonmasse zumindest ein Aussparungsrohr an zumindest einer schalungsinnenseitig hervorstehenden Auskragung der zumindest einen ersten Schalungswandung angeordnet und, insbesondere durch lineares Verstellen der ersten Schalungswandung in axialer Richtung, fixiert. Das Aussparungsrohr wird anschließend in der Schalung derart mit Betonmasse vergossen, dass das Aussparungsrohr im Turmsegment eine axiale Durchgangsöffnung, insbesondere zum Einbringen eines Spannglieds, ausbildet.

Eine weitere vorteilhafte Ausgestaltung des Verfahrens sieht vor, dass vor dem Befüllen der Schalung mit Betonmasse zumindest ein Aussparungsrohr an schalungsinnenseitig hervorstehende Auskragungen, die an gegenüberliegenden ersten Schalungswandung der Schalung vorgesehen sind, angeordnet und, insbesondere durch lineares Verstellen der ersten Schalungswandung in axialer Richtung, fixiert wird. Das Aussparungsrohr wird anschließend in der Schalung durch Verguss mit Betonmasse derart eingebettet wird, dass das Aussparungsrohr im Turmsegment eine axiale Durchgangsöffnung, insbesondere zum Einbringen eines Spannglieds, ausbildet.

Die Erfindung wird nachfolgend anhand von Ausführungsbeispielen unter Bezugnahme auf die Zeichnungen erläutert. Die Zeichnungen sind schematische Darstellungen und zeigen:
Fig. 1 ein aus drei konischen Turmringsegmenten bestehender Ring eines Spannbetonturms;
Fig. 2 eine perspektivische Ansicht eines Spannbetonturms;
Fig. 3 einen Turm, der als Hybridturm ausgebildet ist;
Fig. 4 eine Schalung zur Herstellung eines Turmringsegments gemäß einem ersten Ausführungsbeispiel in einer Seitenansicht;
Fig. 5 die Schalung der Fig. 4 in einer weiteren, senkrecht zur Zeichenebene der Fig. 4 verlaufenden Seitenansicht;
Fig. 6 die Schalung der Fig. 4 in einer Draufsicht;
Fig. 7 eine Schalung gemäß einem zweiten Ausführungsbeispiel in einer Querschnittsdarstellung;
Fig. 8 eine Schalung gemäß einem dritten Ausführungsbeispiel in einer Querschnittsdarstellung;
Fig. 9 eine Schalung gemäß einem vierten Ausführungsbeispiel in einer Querschnittsdarstellung;
Fig. 10 ein Verfahren zur Herstellung des Turmringsegments in einem schematischen Blockdiagramm.

Gleiche oder einander entsprechende Teile sind in allen Zeichnungsfiguren mit denselben Bezugszeichen versehen.

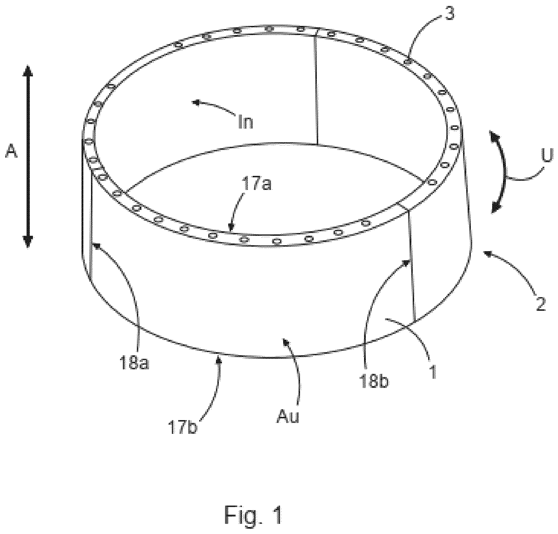

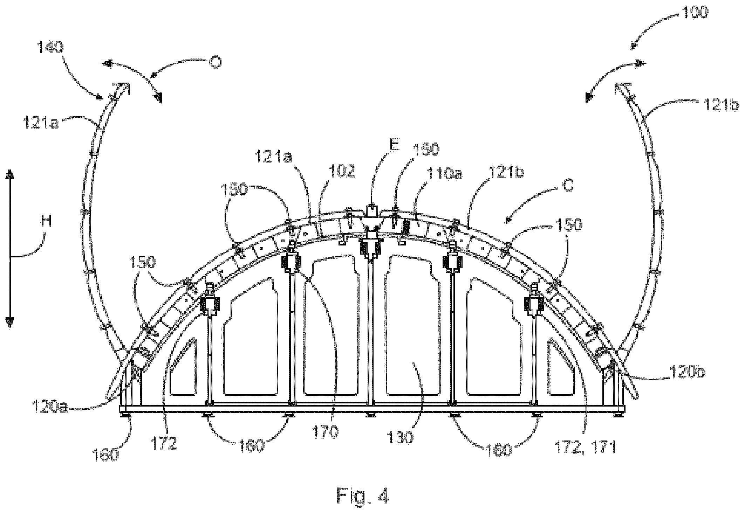

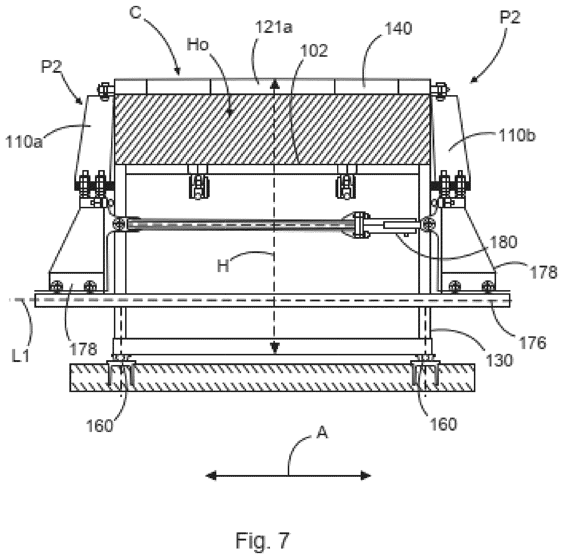

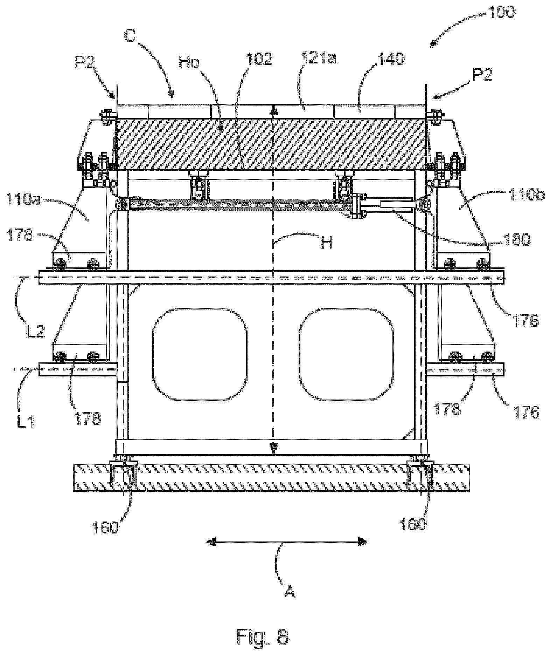

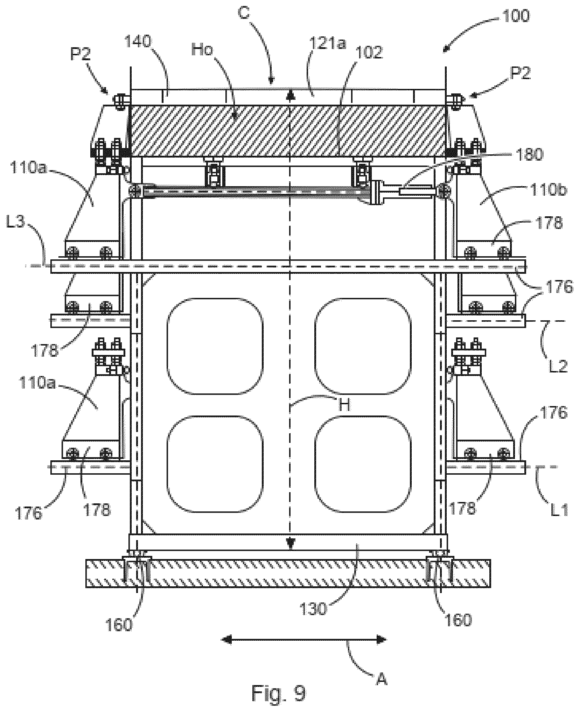

Fig. 1 zeigt exemplarisch einen aus drei konischen Turmringsegmenten 1 bestehenden Ring 2, der eine axiale Turmringstruktur bildet. Die einzelnen konischen Turmringsegmente 1 sind als Betonfertigteile mit oder ohne Bewehrung in einer Schalung 100 hergestellt worden, die in größerem Detail in Figuren 4 bis 6 dargestellt ist. Die in den Figuren 7 bis 9 exemplarisch gezeigten Ausführungsformen der Schalung 100 sind zur Herstellung von konischen Turmringsegmenten 1 ausgelegt.

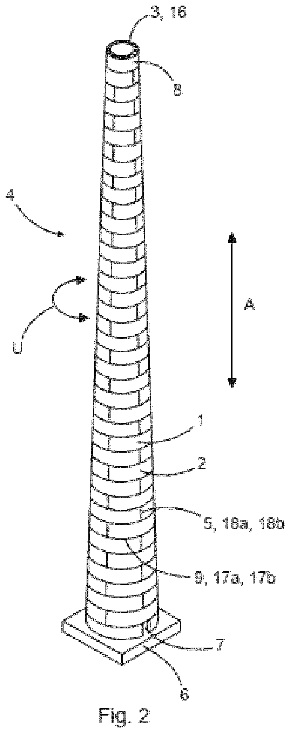

Ein Ring 2 kann in Abhängigkeit von der axialen Höhe des Spannbetonturms 4 insbesondere drei bis vier Turmringsegmente 1 aufweisen. Die Ringe 2 im unteren Bereich des in Fig. 2 beispielhaft dargestellten Spannbetonturms 4 werden aus vier Turmringsegmenten 1 gebildet, im oberen Bereich weist jeder Ring 2 drei Turmringsegmente 1 auf. Dementsprechend erstreckt sich ein Turmringsegment 1 des Rings 2 des in den Zeichnungsfiguren dargestellten Ausführungsbeispiels entweder über 90° oder 120° in Umfangsrichtung. Jeder Ring 2 besitzt über den Umfang verteilte und in axialer Richtung A verlaufende Aussparungsrohre 3, die axiale Durchgangsöffnungen für Spannglieder 16 bilden. Die Spannglieder 16 werden bevorzugt durch Litzen oder Litzenbündel bereitgestellt. Die in den Turmringsegmenten 1 eingebetteten Aussparungsrohre 3 verlaufen entsprechend der Geometrie der Turmringsegmente 1, die konisch oder zylindrisch ausgebildet sein können, parallel zu deren Außen- und/oder Innenseiten.

In Fig. 1 ist zu erkennen, dass jedes Turmringsegment 1 zwei gegenüberliegend angeordnete, horizontale Kontaktflächen 17a, b aufweist, die jeweils Stöße zu in axialer Richtung A angrenzenden Turmringsegmenten 1 (siehe insbesondere Fig. 2) bilden. Des Weiteren umfasst jedes Turmringsegment 1 zwei vertikale Kontaktflächen 18a, b, die jeweils Stöße zu in tangentialer Richtung, also in Umfangsrichtung U, angrenzenden Turmringsegmenten 1 bilden. Wie insbesondere in Fig. 2 ersichtlich, weist die Turmstruktur horizontale Fugen 9 auf, die von den stoßseitig aneinander angrenzenden, horizontalen Kontaktflächen 17a, b gebildet werden. Entsprechend bilden die vertikalen Kontaktflächen 18a, b vertikale Fugen 5 der Turmstruktur.

Die Turmringsegmente 1 werden in Schalungen 100 einzeln und mit hoher Präzession hergestellt. Auf diese Weise kann eine Nacharbeitung der Turmringsegmente 1, insbesondere eine materialabtragende oder materialauftragende Bearbeitung im Bereich der horizontalen Kontaktflächen 17a, 17b und/oder vertikalen Kontaktflächen 18a, 18b unterbleiben. Bevorzugt liegen die Maßabweichungen der Kontaktflächen 17a, 17b, 18a, 18b der in der Schalung 100 gebildeten Turmringsegmente 1 in einem Toleranzbereich von ± 0,5 mm, vorzugsweise ± 0,3 mm oder weniger. Dies ermöglicht insbesondere die bestimmungsgemäße Verwendung der Turmringsegmente 1 in einer Turmstruktur bzw. in einem Spannbetonturm 4 großer Höhe, wobei die Turmringsegmente 1 trocken, d. h. ohne Verbund und ohne Füllmasse angeordnet und insbesondere mittels der Spannglieder 16 verspannt werden. Die zu Ringen 2 zusammengesetzten Turmringsegmente 1 des Spannbetonturms 4 werden mittels der Spannglieder 16 axial zwischen einem endseitigen Übergangsstück 8 der Turmstruktur und einer Verankerung, welche im oder am Fundament 6 der Turmstruktur angeordnet ist, verspannt. Dabei werden die Spannglieder 16 optional zumindest abschnittsweise in den Aussparungsrohren 3 mit Vergussmasse vergossen. In alternativer Ausgestaltung erfolgt eine kraftschlüssige Verspannung ohne Verguss der in die axialen Aussparungen 3 eingebrachten Spannglieder 16.

Fig. 2 zeigt die Turmstruktur eines Spannbetonturms 4, der aus aufeinander positionierten Ringen 2 gebildet ist, die in dem dargestellten Ausführungsbeispiel konisch ausgebildet sind. In alternativer Ausgestaltung hierzu kann der Spannbetonturm 4 kann auch zylinderförmige Ringe 2 aufweisen bzw. vollständig oder abschnittsweise zylinderförmig ausgebildet sein. Vertikale Fugen 5 aufeinanderfolgender Ringe 2 sind entsprechend der Segmentierung der jeweiligen Ringe 2 versetzt zueinander angeordnet. An dem unteren Ende des Spannbetonturms 4 befindet sich ein schematisch dargestelltes Fundament 6, in dem die Spannglieder 16 verankert sind. Am oberen Ende des Spannbetonturms 4 befindet sich ein Übergangsstück 8, an dem die Spannglieder 16 mit ihren oberen Enden verankert sind.

Die vertikalen Fugen 5 und/oder die horizontale Fugen 9 der Turmstruktur sind bevorzugt trocken ohne Verbund und ohne Füllmasse ausgeführt.

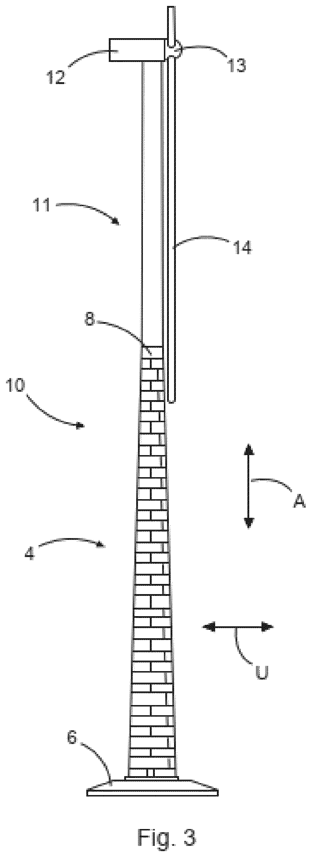

Fig. 3 zeigt einen Turm, der als Hybridturm 10 ausgebildet ist und das Fundament 6, den Spannbetonturm 4 und das Übergangsstück 8 umfasst. Auf dem Übergangsstück 8 befindet sich ein Stahlrohrturm 11, der eine Windturbine 12 mit Nabe 13 und Rotorblätter 14 trägt. In alternativer Ausgestaltung hierzu kann die Windturbine 12 beispielsweise auch direkt auf dem Übergangsstück 8 aufgesetzt sein.

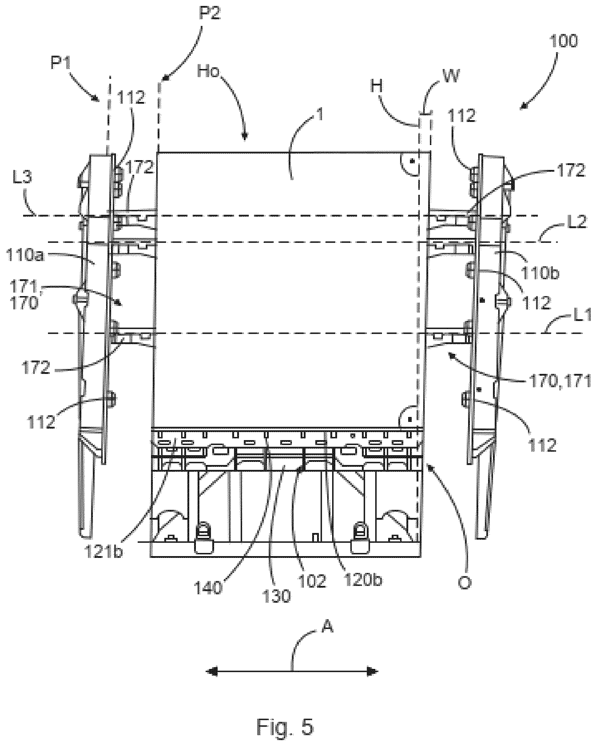

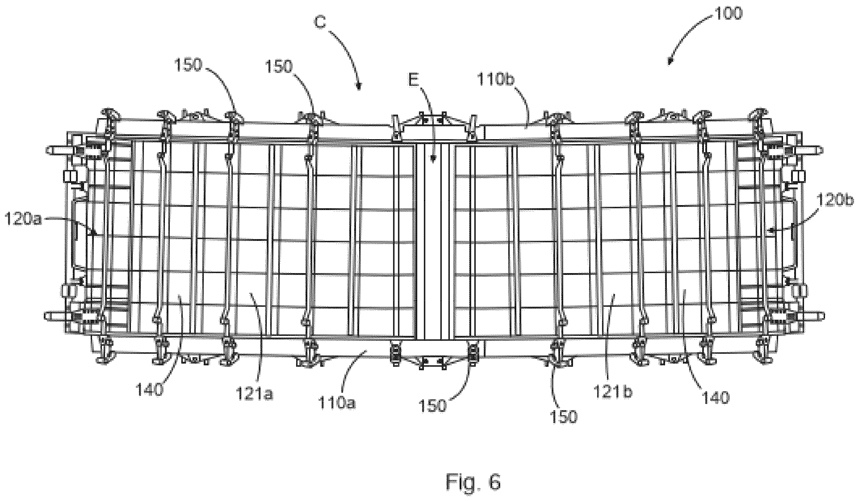

Figuren 4, 5 und 5 zeigen eine Schalung 100 zur Herstellung der Turmringsegmente 1 als Betonfertigteile aus bewehrten oder unbewehrten Beton. Zur Herstellung von bewehrten Turnringsegmenten 1 wird Bewehrungsstahl insbesondere in Form eines Käfigs oder dergleichen in die Schalung 100 eingelegt. Die Schalung 100 bildet einen Hohlraum Ho für Betonmasse, der von einem Schalboden 102, bogenförmigen ersten Schalungswandungen 110a, 110b und zweiten Schalungswandungen 120a, 120b begrenzt wird. Die Schalung 100 weist ferner eine Deckeleinrichtung 140 mit Deckeln 121a, 121b auf, die bezüglich eines Grundgestells 130 der Schalung 100 schwenkbar gelagert sind. Die Deckel 121a, 121b sind zwischen einer geöffneten Stellung O und einer geschlossenen Stellung C schwenkbar. In der geschlossenen Stellung C begrenzen die Deckel 121a, 121b den Hohlraum Ho, wobei in der geschlossenen Stellung C, wie insbesondere in Figur 6 gezeigt, zwischen den Deckeln 121a, 121b ein Spalt verbleibt, der eine Einfüllöffnung E für die in den Hohlraum Ho einzubringende Betonmasse bildet. Die Einfüllöffnung E ist bevorzugt an einem Scheitelpunkt der Schalung 100 angeordnet. Zum Ausschalen des im Hohlraum Ho gefertigten Turmringsegments 1 werden die Deckel 121a, 121b in die geöffnete Stellung O verbracht. Die zum Öffnen der Deckel 121a, 121b notwenige Kraft wird beispielsweise durch zumindest einen hydraulischen Aktuator vermittelt, der sich am Grundgestell 130, auf dem der Schalboden 102 und die zweiten Schalungswände 120a, 120b der Schalung 100 stationär gelagert sind, abstützen.

Der Schalboden 102 weist bezüglich der Hochachse Ho eine konvexe, nach oben gerichtete Wölbung auf, wobei die Wölbung des Schalbodens 102 einer Innenkontur In des herzustellenden Turmringsegments 1 entspricht. Es versteht sich, dass die Hochachse H der Schalung 15 - wie in den Zeichnungsfiguren angedeutet - vorzugsweise in vertikaler Richtung entsprechend dem Schwerefeld der Erde ausgerichtet ist.

Die Deckel 121a, 121b sind entsprechend einer Außenkontur Au des herzustellenden Turmringsegments 1 gewölbt. Die Innenkontur In des Turmsegments 1 wird am Schalboden 102 geformt. Die Außenkontur Au des Turmsegments 1 wird innenseitig an den Deckeln 121a, 121b gebildet. Die Deckel 121a, 121b der Deckeleinrichtung sind in der geschlossenen Stellung C an den ersten Schalungswandungen 110a, 110b mittels hydraulischer Spannvorrichtungen 150 kraftschlüssig verspannbar.

Das Grundgestell 130 kann optional fest in einer Werkshalle oder dergleichen installiert sein. Die in den Zeichnungsfiguren 4 bis 9 gezeigten Schalungen 100 sind vorzugsweise als Teil einer Umlauffertigungsanlage verfahrbar ausgeführt, d. h. das Grundgestell 130 ist auf Rollen 160 gelagert, so dass die Schalungen 100 zwischen Fertigungsstationen der Umlauffertigungsanlage bewegt werden können. Eine mögliche weitere Ausgestaltung beinhaltet das Lagern des Grundgestells 130 auf Schienen oder Schlitten.

Die Schalung 100 ist so ausgelegt, dass die Orientierung und Lage der horizontalen Kontaktflächen 17a, 17b von den am Schalboden 102 gegenüberliegend angeordneten, ersten Schalungswandungen 110a, 110b vorgegeben werden, wohingegen die vertikalen Kontaktflächen 18a, 18b an den zweiten Schalungswandungen 120a, 120b gebildet werden. Bezogen auf das herzustellenden Turmsegment 1 liegen die ersten Schalungswandungen 110a, 110b in axialer Richtung A einander gegenüber und sind parallel zueinander ausgerichtet.

Wie insbesondere in Figur 5 gezeigt, sind die ersten Schalungswandungen 110a, 110b zwischen einer ersten Position P1, in der die ersten Schalungswandungen 110a, 110b von dem Schalboden 102 beabstandet sind, und einer zweiten Position P2, in der die Schalungswandungen 110a, 110b bündig am Schalboden 102 anliegen, in axialer Richtung A in einer Linearführung 170 linear verstellbar geführt. Die ersten Schalungswandungen 110a, 110b sind in der Linearführung 170 so geführt, dass diese bezüglich des Schalbodens 102 in einer vorgegeben Orientierung linear verstellt werden können.

Die in den Figuren 4 bis 6 exemplarisch dargestellte Schalung 100 ist zur Herstellung von konischen Turmringsegmenten 1 ausgebildet, zusätzlich zeigen die Ausführungsbeispiele der Figuren 7 bis 9 Schalungen zur Herstellung von zylindrischen Turmringsegmenten 100. Die Blickrichtung der Querschnittsdarstellungen der Figuren 7 bis 9 entspricht der Perspektive der in Figur 5 dargestellten Seitenansicht. Hinzuzufügen ist, dass die in den Figuren 4 bis 6 dargestellte Schalung 100 zur Herstellung von zylindrischen Turmringsegmenten 1 ausgebildet sein kann, sofern der Winkel W = 0° ist. Mit anderen Worten, werden zylindrische Turmringsegmente 1 mit der in den Figuren 4 bis 6 dargestellten Schalung 100 erhalten, wenn die ersten Schalungswandungen 110a, 110b in der vorgegebenen Orientierung bezüglich des Schalbodens 102 lotsenkrecht ausgerichtet und der Winkel W = 0° ist.

Zur Ausbildung der konischen Turmringsegmente 1 sind die ersten Schalungswandungen 110a, 110b der in Figur 5 gezeigten Ausführung bezüglich der Hochachse H der Schalung 100 in einem Winkel W angeordnet, welcher der Konizität des Turmsegments 1, insbesondere dem Sinus des halben Öffnungswinkels des zugeordneten Kegels, entspricht. Mit anderen Worten sind die ersten Schalungswandungen 110a, 110b in der vorgegebenen Orientierung bezüglich des Schalbodens 102 abweichend von einer lotsenkrechten Anordnung ausgerichtet, wobei die Abweichung vom Winkel W widergespiegelt wird, der von der Konizität des herzustellenden Turmsegments 1 bestimmt ist.

Zur Herstellung von zylindrischen Turmringsegmenten 100 sind die ersten Schalungswandungen 110a, 110b der in den Figuren 7 bis 9 gezeigten Ausführungen in der vorgegebenen Orientierung bezüglich des Schalbodens 102 senkrecht ausgerichtet. Auch hier gilt, sofern die ersten Schalungswandungen 110a, 110b der in den Figuren 7 bis 9 gezeigten Ausführungen nicht senkrecht bezüglich des Schalbodens 102 ausgerichtet sind, können diese Ausführungen zur Herstellung von konischen Turmringsegmenten 100 genutzt werden.

Die Linearführung 170 des in den Figuren 4 bis 6 gezeigten Ausführungsbeispiels umfasst ein Schienensystem 171 mit zueinander bezüglich der axialen Richtung A verschiebbaren Schienen 172, welche die ersten Schalungswandungen 110a, 110b am Schalboden 102 bzw. am Grundgestell 130 linear verstellbar lagern. Die Linearführung 170 der in den Figuren 7 bis 9 dargestellten Ausführungen umfassen in hierzu alternativer Ausgestaltung auf Führungsschienen 176 linear beweglich geführte Führungswägen 178, welche in axialer Richtung A verstellt werden können. Die ersten Schalungswandungen 110a, 110b sind mittels eines Linearantriebs 180, insbesondere mittels eines elektrischen, elektromechanischen oder hydraulischen Linearantriebs 180, wie etwa in Figuren 7 bis 9 explizit dargestellt, bezüglich des Schalbodens 102 in axialer Richtung A linear verstell- bzw. verfahrbar.

Die Linearführung 170 umfasst somit bevorzugt das Schienensystem 171 mit mehreren zueinander bezüglich der axialen Richtung A verschiebbaren Schienen und/oder mehrere, auf Führungsschienen 176 beweglich geführten Führungswägen 178. Aus Gründen der Stabilität erfolgt die Krafteinleitung der Linearführung 170 auf mehreren lateralen Ebenen L1, L2, L3, insbesondere zwei oder drei lateralen Ebenen L1, L2, L3, wie etwa in Figuren 5 oder 7 bis 9 dargestellt, welche sich in Ebenen senkrecht zur Hochachse H erstrecken und voneinander bezüglich der Hochachse H beabstandet sind. Auf diese Weise können insbesondere auf die ersten Schalungswandungen 110a, 110b in der außenliegenden ersten Position P1 einwirkenden Scherkräfte besser in das Grundgestell 130 eingeleitet werden, um sicherzustellen, dass die vorgegebene Orientierung der ersten Schalungswandungen 110a, 110b bezüglich des Schalbodens 102 auch bei Schalungen 100 eingehalten wird, die zur Herstellung von Turmsegmenten 1 mit vergleichsweise großen Ausdehnungen in Umfangsrichtung U ausgelegt sind.

An den ersten Schalungswandungen 110a, 110b sind Auskragungen 112 vorgesehen, welche korrespondierend zu einem Innendurchmesser der Aussparungsrohre 3 insbesondere in der Gestalt von Koni, Kegelstümpfen oder dergleichen ausgebildet sind. Die Auskragungen 112 ragen innenseitig in den Hohlraum Ho hinein und dienen zur Anordnung und Fixierung der Aussparungsrohre 3 bei der Herstellung der Turmsegmente 1. Die Auskragungen 112 sind an den ersten Schalungswandungen 110a, 110b einander gegenüberliegend angeordnet. Zur Fixierung der in den Hohlraum Ho eingebrachten Aussparungsrohre 3 werden die ersten Schalungswandungen 110a, 110b in die innenliegende zweite Position P2 verbracht. Die Auskragungen 112 bilden Hinterschneidungen beim Gießen der Turmringsegmente 1, die aufgrund der linearen Verstellbarkeit der ersten Schalungswandungen 110a, 110b auch bei Turmringsegmenten 1 mit relativ großer Ausdehnung in Umfangsrichtung U toleriert werden können. Zum Ausschalen der in der Schalung 100 hergestellten Turmringsegmente 1 werden die ersten Schalungswandungen 110a, 110b nach dem Aushärten in die außenliegende erste Position P2 verbracht. Die Aussparungsrohre 3 werden präzise entsprechend der Anordnung der Auskragungen 112 an den ersten Schalungswandungen 110a, 110b ausgerichtet.

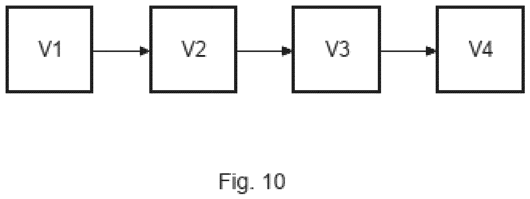

Fig. 10 illustriert das Verfahren zur Herstellung des konischen oder zylinderförmigen Turmringsegments 1 in einem schematischen Blockdiagramm. Die Herstellung der Turmringsegmente 1 als Betonfertigteile erfolgt einzeln in den vorstehend beschriebenen Schalungen 100. Die Herstellung der Turmringsegmente 1 erfolgt bevorzugt in Umlauffertigung, bei der insbesondere das Bestücken der Schalung 100 mit Bewehrungsstahl, Einbauteilen, wie etwa den genannten Aussparungsrohren 3, das Verfüllen der Schalung 100 mit Betonmasse, das Aushärten der in den Hohlraum Ho der Schalung 100 eingefüllten Betonmasse und/oder das Ausschalen des ausgehärteten Betonfertigteils örtlich getrennt an verschiedenen Fertigungsstationen durchgeführt werden, um die relevanten Prozessparameter besser kontrollieren zu können.

In einem ersten Verfahrensschritt V1 wird die in der geöffneten Stellung O bereitgestellte Schalung 100 bestückt. Hierbei wird zumindest ein Aussparungsrohr 3 an den innenseitigen Auskragungen 112 angesetzt und dadurch kraftschlüssig fixiert, dass die ersten Schalungswandungen 110a, 110b in der vorgegebenen Orientierung von der außenliegenden, ersten Position P1 in die innenliegende, zweite Position P2 verbracht, wobei die ersten Schalungswandungen 110a, 110b in axialer Richtung A entlang der Linearführung 170 insbesondere mittels des Linearantriebs 180 linear verstellt werden. Typischerweise werden mehrere Aussparungsrohr 3 in bevorzugt äquidistanter Anordnung in Umfangsrichtung U an die innenseitigen Auskragungen 112 angesetzt und kraftschlüssig fixiert. Die Aussparungsrohre 3 können zusätzlich zur Fixierung von optional einzubringendem Bewehrungsstahl, insbesondere in Form eines Bewehrungskäfigs, dienen, um diesen im herzustellenden Turmringsegment 1 innenliegend anzuordnen. Anschließend werden die Deckel 121a, 121b der Deckeleinrichtung 140 von der geöffneten Stellung O in die geschlossene Stellung C verschwenkt, wobei zwischen den Deckeln 121a, 121b die Einfüllöffnung E für die Betonmasse verbleibt. Die Deckel 121a, 121b werden in der geschlossenen Stellung C an den ersten Schalungswandungen 110a, 110b mittels der hydraulischen Spannvorrichtungen 150 kraftschlüssig fixiert.

In einem zweiten Verfahrensschritt V2 wird der in der Schalung 100 gebildete Hohlraum Ho über die Einfüllöffnung E mit Betonmasse verfüllt, wobei die eingebrachten Aussparungsrohre 3 derart mit Betonmasse vergossen werden, dass die Aussparungsrohre 3 im Turmsegment 1 eingebettete axiale Durchgangsöffnungen zum Einbringen der Spannglieder ausbildet. Anschließend wird die Betonmasse in der geschlossenen Schalung C in einem dritten Verfahrensschritt V3 ausgehärtet, wobei die Schalung 100 zum Aushärten der eingefüllten Betonmasse bevorzugt einer definierten Temperierung ausgesetzt wird. Nach dem Aushärten der Betonmasse erfolgt in einem vierten Verfahrensschritt V4 das Ausschalen des Turmringsegments 1. Hierzu wird die durch die Spannvorrichtungen 150 vermittelte kraftschlüssige Fixierung gelöst, die Deckeleinrichtung 140 der Schalung 100 in die geöffnete Stellung O verbracht und die ersten Schalungswandungen 110a, 110b von der innenliegenden, zweiten Position P1 in die außenliegende, erste Position P2 in axialer Richtung linear verstellt, um die Entnahme des fertiggestellten Betonfertigteils zu ermöglichen.

Es versteht sich, dass die Erfindung vorstehend anhand einer exemplarischen Ausführung beschrieben wurde, welche in den Zeichnungsfiguren dargestellt ist. Die Erfindung ist jedoch nicht auf das konkret dargestellte Ausführungsbeispiel beschränkt, vielmehr sind Abweichungen hiervon im Umfang des durch die beigefügten Patentansprüche festgelegten Schutzbereichs möglich und vorgesehen.

## Patentansprüche

1. Schalung (100) zur Herstellung eines Turmringsegments (1), insbesondere einer Windkraftanlage, als Betonfertigteil, mit
- einem gewölbten Schalboden (102), dessen Wölbung einer zylindrischen oder konischen Innenkontur (In) des herzustellenden Turmringsegments (1) entspricht,
- Schalungswandungen (110a, 110b, 120a 120b), welche mit dem Schalboden (102) einen mit Betonmasse befüllbaren Hohlraum (Ho) begrenzen,
**dadurch gekennzeichnet, dass** die zumindest eine erste der Schalungswandungen (110a, 110b) bezüglich des Schalbodens (102) in einer Linearführung (170) linear verstellbar gelagert ist.

2. Schalung (100) nach Anspruch 1, **dadurch gekennzeichnet, dass** die zumindest eine erste Schalungswandung (110a, 110b) in einer vorgegebenen Orientierung bezüglich des Schalbodens (102) linear verstellbar gelagert ist.

3. Schalung (100) nach Anspruch 2, **dadurch gekennzeichnet, dass** die vorgegebene Orientierung der ersten Schalungswandung (110a, 110b) bezüglich des Schalbodens (102) einer Konizität des herzustellenden Turmringsegments (1) entspricht.

4. Schalung (100) nach Anspruch 3, **dadurch gekennzeichnet, dass** die zumindest eine erste Schalungswandung (110a, 10b) in der vorgegebenen Orientierung bezüglich einer Hochachse (H) der Schalung (100) in einem Winkel (W) ausgerichtet ist, welcher der Konizität des herzustellenden Turmringsegments (1) entspricht.

5. Schalung (100) nach einem der vorhergehenden Ansprüche, **gekennzeichnet durch** einen Linearantrieb, insbesondere elektrischer, elektromechanischer oder hydraulischer Linearantrieb, welcher dazu ausgebildet ist, die zumindest eine erste Schalungswandung (110a, 110b) bezüglich des Schalbodens (102) linear zu verstellen.

6. Schalung (100) nach einem der vorhergehenden Ansprüche, **dadurch gekennzeichnet, dass** die zumindest eine erste Schalungswandung (110a, 110b) zumindest eine schalungsinnenseitig hervorstehende Auskragung (112) aufweist, welche zur Anordnung und Fixierung eines in das Turmsegment (1) einzubettenden Einbauteils, insbesondere Aussparungsrohrs (3), ausgebildet ist.

7. Schalung (100) nach einem der vorhergehenden Ansprüche, **dadurch gekennzeichnet, dass** eine weitere erste Schalungswandung (110a, 110b) an einer der ersten Schalungswandung (110a, 110b) gegenüberliegenden Seite des Schalbodens (102) vorgesehen ist, wobei die weitere erste Schalungswandung (110a, 110b) bezüglich des Schalbodens (102) linear verstellbar gelagert ist und die beiden gegenüberliegenden ersten Schalungswandungen (110a, 110b) parallel zueinander ausgerichtet sind.

8. Schalung (100) nach Anspruch 7, **dadurch gekennzeichnet, dass** jeweils gegenüberliegend an den beiden ersten Schalungswandungen (110a, 110b) schalungsinnenseitig hervorstehende Auskragungen (112) zur Anordnung des in das Turmsegment (1) einzubettenden Einbauteils (3), insbesondere Aussparungsrohrs (3), vorgesehen sind.

9. Schalung (100) nach einem der vorhergehenden Ansprüche, **dadurch gekennzeichnet, dass** die Linearführung (170) ein Schienensystem (171) mit zueinander bezüglich der axialen Richtung (A) verschiebbaren Schienen (172) und/oder einem auf einer Führungsschiene (176) beweglich geführten Führungswagen (178) umfasst.

10. Schalung (100) nach Anspruch 9, **dadurch gekennzeichnet, dass** die Linearführung (170) auf mehreren, insbesondere zwei oder drei, zueinander bezüglich einer Hochachse (H) der Schalung (100) beabstandeten lateralen Ebenen angeordnet sind.

11. Verfahren zur Herstellung eines Turmringsegments (1), insbesondere einer Windkraftanlage, als Betonfertigteil, **dadurch gekennzeichnet, dass** eine Schalung (100) gemäß einem der vorhergehenden Ansprüche mit Betonmasse verfüllt wird und nach dem Aushärten der Betonmasse das in der Schalung (100) hergestellte Turmringsegment ausgeschalt wird, wobei die zumindest eine erste Schalungswandung (110a, 110b) bezüglich des Schalbodens (102) in axialer Richtung (A) linear verstellt wird.

12. Verfahren nach Anspruch 11, **dadurch gekennzeichnet, dass** die zumindest eine erste Schalungswandung (110a, 110b) in einer vorgegebenen Orientierung bezüglich des Schalbodens (102) in axialer Richtung (A) linear verstellt wird, wobei die vorgegebene Orientierung der zumindest einen ersten Schalungswandung (110a, 110b) bezüglich des Schalbodens (102) einer Konizität des herzustellenden Turmringsegments (1) entspricht.

13. Verfahren nach Anspruch 12, **dadurch gekennzeichnet, dass** die zumindest eine erste Schalungswandung (110a, 110b) in der vorgegebenen Orientierung bezüglich einer Hochachse (H) der Schalung (100) zur Herstellung eines konischen Turmringsegments (1) in einem Winkel (W) ausgerichtet ist, der der Konizität des herzustellenden Turmringsegments (1) entspricht.

14. Verfahren nach einem der Ansprüche 12 bis 13, **dadurch gekennzeichnet, dass** vor dem Befüllen der Schalung (100) mit Betonmasse zumindest ein Aussparungsrohr (3) an zumindest einer schalungsinnenseitig hervorstehenden Auskragung (112) der zumindest einen ersten Schalungswandung (110a, 110b) angeordnet und fixiert wird, wobei das Aussparungsrohr (3) in der Schalung (100) derart mit Betonmasse vergossen wird, dass das Aussparungsrohr (3) im Turmsegment (1) eine axiale Durchgangsöffnung, insbesondere zum Einbringen eines Spannglieder (16), ausbildet.

15. Verfahren nach Anspruch 14, **dadurch gekennzeichnet, dass** vor dem Befüllen der Schalung (100) mit Betonmasse zumindest ein Aussparungsrohr (112) an schalungsinnenseitig hervorstehenden Auskragungen (112), die an gegenüberliegenden ersten Schalungswandung (110a,110b) der Schalung (100) vorgesehen sind, angeordnet und fixiert wird, wobei das Aussparungsrohr (3) in der Schalung (100) durch Verguss mit Betonmasse derart eingebettet wird, dass das Aussparungsrohr (3) im Turmsegment (1) eine axiale Durchgangsöffnung, insbesondere zum Einbringen eines Spanngliedes (16), ausbildet.
